# EUROPEAN PATENT APPLICATION

(11) **EP 4 524 438 A1**
(43) Date of publication of application: **19.03.2025**
(21) Application number: 23196695.3
(22) Date of filing: 12.09.2023
(51) Int. Cl.: F16K 17/06

(54) **COMPACT AND EFFICIENT OVERPRESSURE VALVE**

(71) Applicant: Airbus SAS, 31700 Blagnac (FR)
(72) Inventor: BAUER, Fabian, 31700 BLAGNAC (FR); DIAZ VIDES, Jose Alejandro, 31700 BLAGNAC (FR)
(74) Representative: Fantin, Laurent

(57) **Abstract**

The invention relates to an overpressure valve comprising :
- a valve body (32) which comprises a fluid inlet (32.1), a fluid outlet (32.2) and at least one cylindrical inner surface (F40.1) between the fluid inlet and outlet (32.1, 32.2),
- a stopper (34) movable between a closed position in which the stopper (34) is pressed against the fluid inlet (32.1) and an open position,
- a spring (36) configured to push the stopper (34) into the closed position, and
- an adjustable support (50) positioned between the fluid inlet and outlet (32.1, 32.2), and configured to cooperate with the cylindrical inner surface (F40.1) to move relative to the valve body (32) to adjust the length of the spring (36) in the closed position, said adjustable support (50) comprising at least one orifice (52) crossing said adjustable support (50) to make the fluid inlet and outlet (32.1, 32.2) communicate.

The invention makes it possible to obtain a compact, light and efficient overpressure valve.

## Description

The present application relates to a compact and efficient overpressure valve. This type of valve is used to protect a gaseous system from higher pressures.

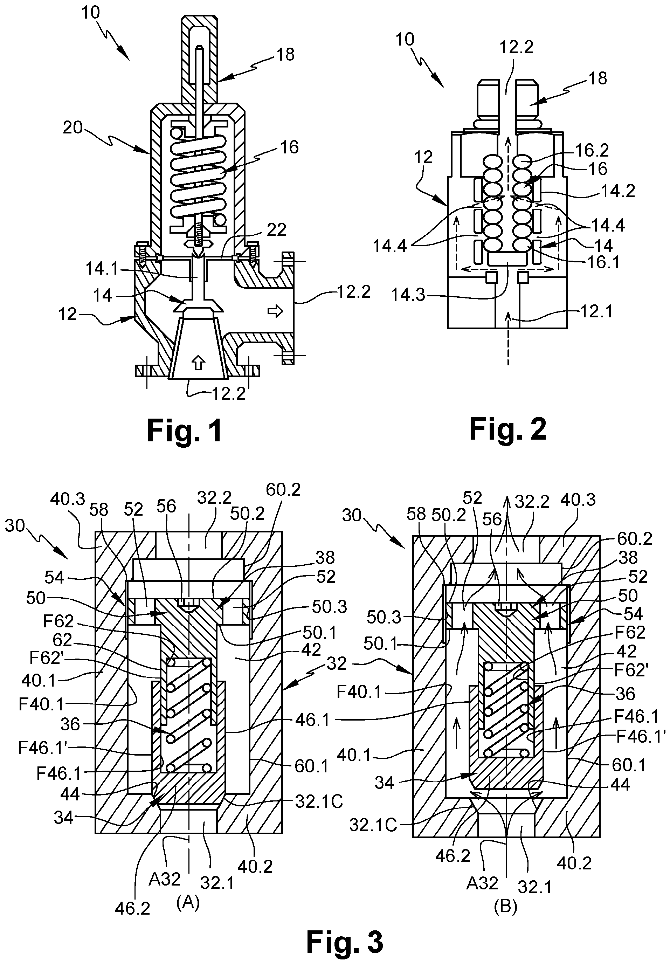

According to known embodiments visible in figures 1 and 2, an overpressure valve 10 comprises :
- a valve body 12 which has a fluid inlet 12.1 and a fluid outlet 12.2,
- a stopper 14 movable between a closed position in which the stopper 14 is pressed against the fluid inlet 12.1 and prevents the passage of fluid as well as an open position in which the stopper 14 is spaced from the fluid inlet 12.1 and allows the passage of fluid from the fluid inlet 12.1 to the fluid outlet 12.2,
- a spring 16 configured to push and maintain the stopper 14 into the closed position, and
- an adjustment system 18 to control the calibration of the spring 16.

In operation, as soon as the fluid pressure, upstream of the fluid inlet 12.1, exceeds a pressure threshold, the stopper 14 switches from the closed position to the open position. The value of the pressure threshold depends on the spring 16 calibration set using the adjustment system 18.

In a first embodiment of the prior art that can be seen in figure 1, the spring 16 and the adjustment system 18 are not positioned in the valve body 12. According to this first embodiment, the overpressure valve 10 comprises an extension 20 in which the spring 16 and the adjustment system 18 are positioned, the valve body 12 and the extension 20 being separated by a partition 22. In addition, the stopper 14 comprises a rod 14.1 which passes through the partition 22, the spring 16 being configured to cooperate with this rod 14.1 to push and maintain the stopper 14 in the closed position.

According to this first embodiment of the prior art, the flow path between the fluid inlet 12.1 and the fluid outlet 12.2 is clear. So, in the open position, the fluid is not slowed down and can escape freely. Therefore, the pressure drop is acceptable.

This first embodiment is not fully satisfactory because the presence of the extension 20 leads to a significant increase in the mass and the size of the overpressure valve 10.

In a second embodiment of the prior art that can be seen in figure 2, the spring 16 is positioned in the valve body 14. According to the second embodiment, the stopper 14 comprises a tubular body 14.2 closed at one end by a transverse wall 14.3 configured to close the fluid inlet 12.1 in the closed position. The spring 16 is positioned in the tubular body 14.2 of the stopper 14, a first end 16.1 of the spring 16 bearing against the transverse wall 14.3 of the stopper 14, the second end 16.2 of the spring 16 bearing against the adjustment system. The fluid inlet 12.1, the fluid outlet 12.2, the tubular body 14.2 of the stopper 14 and the spring 16 are aligned or coaxial. As illustrated in figure 2, the tubular body 14.2 includes side orifices 14.4 to allow fluid to pass through it and reach the fluid outlet 12.2.

This second embodiment makes it possible to obtain a more compact and lighter overpressure valve 10 compared to that of the first embodiment.

In operation, when the overpressure valve 10 is in the open position, the fluid must pass between the coils of the spring 16 to reach the fluid outlet 12.2. So the flow path is restricted and the pressure drop is high. Therefore, the second embodiment is not fully satisfactory because the overpressure valve's performance is low.

The present invention aims to overcome all or some of the drawbacks of the prior art.

To this end the invention has for object an overpressure valve comprising :
- a valve body which comprises a fluid inlet, a fluid outlet and at least one cylindrical inner surface between the fluid inlet and outlet,
- a stopper movable between a closed position in which the stopper is pressed against the fluid inlet and prevents the passage of a fluid and an open position in which the stopper is spaced from the fluid inlet and allows the passage of a fluid from the fluid inlet to the fluid outlet,
- a spring configured to push and maintain the stopper into the closed position, the spring having a length in the closed position, and
- an adjustment system which comprises an adjustable support movable relative to the valve body in an adjustment direction to adjust the length of the spring in the closed position.

According to the invention, the adjustable support is positioned between the fluid inlet and outlet, and configured to cooperate with the cylindrical inner surface to move in the adjustment direction, said adjustable support comprising at least one orifice crossing it to communicate the fluid inlet and outlet.

This solution makes it possible to obtain a compact, light and efficient overpressure valve.

According to an embodiment of the invention, the adjustable support comprises a first and second faces respectively oriented towards the fluid inlet and outlet as well as a cylindrical side face and wherein the overpressure valve comprises a helical connection connecting the valve body and the adjustable support.

According to an embodiment of the invention, at least a part of the cylindrical inner surface of the body valve and the cylindrical side face of the adjustable support are threaded. According to an embodiment of the invention, the adjustable support comprises at least one recess, on the second face, configured to rotate the adjustable support around an axis parallel to the adjustment direction.

According to an embodiment of the invention, the at least one recess is positioned on the second face so as to be accessible from the fluid outlet.

According to an embodiment of the invention, the stopper comprises a first sleeve closed at one end by a transverse end wall configured to close the fluid inlet in the closed position and wherein the adjustment system comprises a second sleeve connected to the adjustable support, the first and second sleeves being configured to slide one inside the other, the spring being positioned in the first and second sleeves.

According to an embodiment of the invention, a part between the stopper and the adjustment system comprises a rod positioned inside the spring and coaxial with the first or second sleeve. According to an embodiment of the invention, the rod is secured to the adjustable support and coaxial to the second sleeve, the spring being positioned between the second sleeve and the rod, the second sleeve being configured to slide Inside the first sleeve.

According to an embodiment of the invention, the overpressure valve comprises at least one washer positioned between the spring and the stopper or the adjustable support. According to an embodiment of the invention, the overpressure valve comprises a first washer positioned between the spring and the stopper as well as a second washer positioned between the spring and the adjustable support.

Other features and advantages will emerge from the following description of the invention given by way of example only with reference to the appended drawings, in which :
- Figure 1 is a schematic cross section of an overpressure valve illustrating a first embodiment of the prior art,
- Figure 2 is a schematic cross section of an overpressure valve illustrating a second embodiment of the prior art,
- Figure 3 is a schematic cross section of an overpressure valve illustrating an embodiment of the invention, in a closed position on part A of figure 3 and in an open position on part B of figure 3
- Figure 4 is a perspective section of an overpressure valve illustrating an embodiment of the invention.

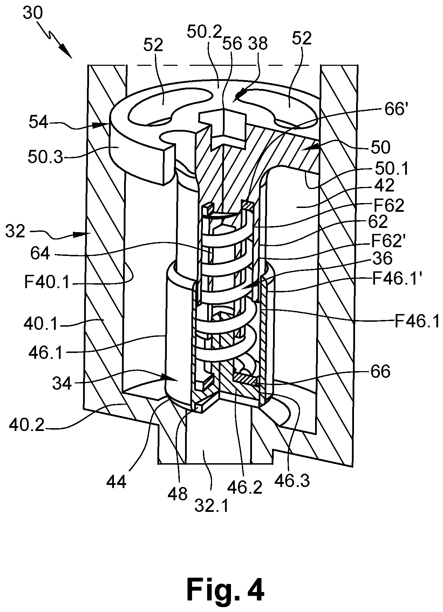

As illustrated in figures 3 and 4, an overpressure valve 30 comprises :
- a valve body 32 which has a fluid inlet 32.1 and a fluid outlet 32.2,
- a stopper 34 movable between a closed position (visible in part A of the figure 3) in which the stopper 34 is pressed against the fluid inlet 32.1 and prevents the passage of fluid as well as an open position (visible in part B of the figure 3) in which the stopper 34 is spaced from the fluid inlet 32.1 and allows the passage of fluid from the fluid inlet 32.1 to the fluid outlet 32.2,
- a spring 36 configured to push and maintain the stopper 34 into the closed position, and
- an adjustment system 38 to control the calibration of the spring 36.

According to one embodiment, the valve body 32 comprises a tubular body 40.1 which extends between first and second ends, and comprises a first axis A32, a first end wall 40.2 closing the first end of the tubular body 40.1 and a second end wall 40.3 closing the second end of the tubular body 40.1, the fluid inlet and outlet 32.1, 32.2 respectively crossing the first and second end walls 40.2, 40.3. The tubular body 40.1, the first and second end walls 40.2, 40.3 delimit a chamber 42. The tubular body 40.1 comprises an inner surface F40.1 in contact with the fluid when the stopper 34 is in the open position.

According to one configuration, the tubular body 40.1, the fluid inlet 32.1 and the fluid outlet have circular cross sections and are coaxial with the first axis A32. The fluid inlet and outlet 32.1, 32.2 have the same diameter, this diameter being smaller than that of the tubular body 40.1.

According to one arrangement, the fluid inlet 32.1 comprises a flared portion 32.1C which opens into the chamber 42. This flared portion forms a seat 44.

Whatever the embodiment, the valve body 32 comprises at least one cylindrical inner surface F40.1 between the fluid inlet and outlet 32.1, 32.2, said at least one cylindrical inner surface F40.1 being in contact with a fluid when the stopper 34 is in the open position.

The stopper 34 comprises a first sleeve 46.1 closed at one end by a transverse end wall 46.2 configured to close the fluid inlet 32.1 in the closed position. The stopper 34 comprises a junction zone 46.3, connecting the first sleeve 46.1 and the transverse end wall 46.2, configured to cooperate with the seat 44 in a sealed manner when the stopper 34 is in the closed position.

According to one embodiment, at least one part among the seat 44 and the stopper 34 includes a seal 48 to improve the sealing between the stopper 34 and the seat 44 in the closed position. According to one arrangement, at least the junction zone 46.3 comprises an elastomeric coating forming the seal 48. The junction zone 46.3 and the transverse end wall 46.2 comprise an elastomeric coating.

The first sleeve 46.1 comprises first interior and exterior surfaces F46.1, F46.1'. According to one configuration, the first interior and exterior surfaces F46.1, F46.1' are coaxial and have circular cross sections.

The spring 36 is a compression spring which has an outer diameter. The spring 36 is positioned in the first sleeve 46.1 in the stopper 34. The spring 36 is coaxial with the first axis A32. The spring 36 has a stiffness and a length in the closed position. The spring 36 exerts a force on the stopper 34 according to its stiffness and its length.

The adjustment system 38 comprises an adjustable support 50 movable relative to the valve body 32 in an adjustment direction parallel to the first axis A32 to adjust the length of the spring 36 in the closed position. According to the invention, the adjustable support 50 is positioned in the chamber 42, between the fluid inlet and outlet 32.1, 32.2, configured to cooperate with the cylindrical inner surface F40.1 to move in the adjustment direction and comprises at least one orifice 52 passing through the adjustable support 50 in order to make the fluid inlet and outlet 32.1, 32.2 communicate.

The spring 36 and the adjustable support 50 being positioned inside the chamber 42, the overpressure valve 30 is compact and its weight is as small as the weight of the second embodiment of the prior art.

According to the invention, the flow path between the fluid inlet 12.1 and the fluid outlet 12.2 is clear and does not pass through the spring 36. So, in the open position, the fluid is not slowed down and can escape freely. Therefore, the pressure drop is acceptable and the overpressure valve's performance is as high as that of the first embodiment of the prior art. The valve body 32, the adjustable support 50 and the stopper 34 can be realized in metal. According to one embodiment, the adjustable support 50 comprises a first and second faces 50.1, 50.2 respectively oriented towards the fluid inlet and outlet 32.1, 32.2 as well as a cylindrical side face 50.3 configured to cooperate with the inner surface F40.1 of the tubular body 40.1 of the valve body 32. The first and second faces 50.1, 50.2 are approximately perpendicular to the first axis A32.

The overpressure valve 30 comprises a helical connection 54 connecting the tubular body 40.1 of the valve body 32 and the adjustable support 50 of the adjustment system 38. According to one configuration, the cylindrical side face 50.3 of the adjustable support 50 is threaded and at least a part of the inner surface F40.1 of the tubular body 40.1 is threaded.

According to this embodiment, when the adjustable support 50 pivots around the first axis A32, it translates with respect to the valve body 32 in the adjustment direction, which makes it possible to regulate the length of the spring 36 in the closed position.

The adjustable support 50 includes at least one recess 56, on the second face 50.2, configured to rotate the adjustable support 50 around the first axis A32 parallel to the adjustment direction. According to one configuration, the recess is hexagonal. Of course, the invention is not limited to this geometry for the recess.

The recess 56 is centered with respect to the second face 50.2 of the adjustable support 50. The at least one recess 56 is positioned on the second face 50.2 so as to be accessible from the fluid outlet 32.2. So a tool can be used to screw or unscrew the adjustable support 50 by passing through the second end wall 40.3 via the fluid outlet 32.2.

The adjustable support 50 is spaced from the fluid outlet 32.2. For this purpose, the inner surface F40.1 of the tubular body 40.1 comprises a shoulder 58, a first section 60.1 between the shoulder 58 and the first end wall 40.2 as well as a second section 60.2 between the shoulder 58 and the second end wall 40.3, the first section 60.1 having a larger diameter than that of the second section 60.2.

The distance between the second end wall 40.3 and the adjustable support 50 is determined to limit pressure drops. The number and shape of the holes 52 that cross the adjustable support 50 are determined to limit pressure drops.

According to one embodiment, the adjustment system 38 comprises a second sleeve 62 connected to the first face 50.1. The second sleeve 62 comprises second interior and exterior surfaces F62, F62'. According to one configuration, the second interior and exterior surfaces F62, F62' are coaxial and have circular cross sections.

The first and second sleeves 46.1, 62 are configured to slide one inside the other, the spring 36 being positioned in the first and second sleeves 46.1, 62. According to one arrangement, the second sleeve 62 is configured to slide inside the first sleeve 46.1. The exterior surface F62' of the second sleeve 62 and the interior surface F46.1 of the first sleeve 46.1 have approximately the same diameter. In addition, the interior surface F62 of the second sleeve 62 has approximately the same diameter as the outer diameter of the spring 36.

According to one embodiment shown on figure 4, a part between the stopper 34 and the adjustment system 38 comprises a rod 64 positioned inside the spring 36, coaxial with the first or second sleeve 46.1, 62. According to one configuration, the rod 64 is secured to the adjustable support 50 and coaxial to the second sleeve 62, the spring 36 being positioned between the rod 64 and the second sleeve 62.

According to one embodiment shown on figure 4, the overpressure valve 30 comprises at least one washer 66 positioned between the spring 36 and the stopper 34 or the adjustable support 50. According to one configuration, the overpressure valve 30 comprises a first washer 66 positioned between the spring 36 and the transverse end wall 46.2 of the stopper 34 as well as a second washer 66' positioned between the spring 36 and the adjustable support 50, between the rod 64 and the second sleeve 62. Each washer 66, 66' is used in order to avoid wear between the spring 36 and the stopper 34 or the adjustable support 50.

## Claims

1. Overpressure valve comprising :
- a valve body (32) which comprises a fluid inlet (32.1), a fluid outlet (32.2) and at least one cylindrical inner surface (F40.1) between the fluid inlet and outlet (32.1, 32.2),
- a stopper (34) movable between a closed position in which the stopper (34) is pressed against the fluid inlet (32.1) and prevents the passage of a fluid and an open position in which the stopper (34) is spaced from the fluid inlet (32.1) and allows the passage of a fluid from the fluid inlet (32.1) to the fluid outlet (32.2),
- a spring (36) configured to push and maintain the stopper (34) into the closed position, the spring (36) having a length in the closed position, and
- an adjustment system (38) which comprises an adjustable support (50) movable relative to the valve body (32) in an adjustment direction to adjust the length of the spring (36) in the closed position,
**characterized in that** the adjustable support (50) is positioned between the fluid inlet and outlet (32.1, 32.2), and configured to cooperate with the cylindrical inner surface (F40.1) to move in the adjustment direction the adjustable support (50) comprising at least one orifice (52) crossing the adjustable support (50) to make the fluid inlet and outlet (32.1, 32.2) communicate.

2. Overpressure valve according to claim 1, wherein the adjustable support (50) comprises a first and second faces (50.1, 50.2) respectively oriented towards the fluid inlet and outlet (32.1, 32.2) as well as a cylindrical side face (50.3) and wherein the overpressure valve (30) comprises a helical connection (54) connecting the valve body (32) and the adjustable support (50).

3. Overpressure valve according to the preceding claim, wherein at least a part of the cylindrical inner surface (F40.1) of the body valve (32) and the cylindrical side face (50.3) of the adjustable support (50) are threaded.

4. Overpressure valve according to one of claims 2 to 3, wherein the adjustable support (50) comprises at least one recess (56), on the second face (50.2), configured to rotate the adjustable support (50) around an axis (A32) parallel to the adjustment direction.

5. Overpressure valve according to the preceding claim, wherein the at least one recess (56) is positioned on the second face (50.2) so as to be accessible from the fluid outlet (32.2).

6. Overpressure valve according to one of the preceding claims, wherein the stopper (34) comprises a first sleeve (46.1) closed at one end by a transverse end wall (46.2) configured to close the fluid inlet (32.1) in the closed position and wherein the adjustment system (38) comprises a second sleeve (62) connected to the adjustable support (50), the first and second sleeves (46.1, 62) being configured to slide one inside the other, the spring (36) being positioned in the first and second sleeves (46.1, 62).

7. Overpressure valve according to the preceding claim, wherein a part between the stopper (34) and the adjustment system (38) comprises a rod (64) positioned inside the spring (36) and coaxial with the first or second sleeve (46.1, 62).

8. Overpressure valve according to the preceding claim, wherein the rod (64) is secured to the adjustable support (50) and coaxial to the second sleeve (62), the spring (36) being positioned between the second sleeve (62) and the rod (64), the second sleeve (62) being configured to slide Inside the first sleeve (46.1).

9. Overpressure valve according to one of the preceding claims, wherein the overpressure valve (30) comprises at least one washer (66) positioned between the spring (36) and the stopper (34) or the adjustable support (50).

10. Overpressure valve according the preceding claim, wherein the overpressure valve (30) comprises a first washer (66) positioned between the spring (36) and the stopper (34) as well as a second washer (66') positioned between the spring (36) and the adjustable support (50).
